# EUROPÄISCHE PATENTANMELDUNG

(11) **EP 3 832 082 A1**
(43) Veröffentlichungstag der Anmeldung: **09.06.2021**
(21) Anmeldenummer: 20205371.6
(22) Anmeldetag: 03.11.2020
(51) Int. Cl.: F01P 11/04

(54) **KÜHLKREISLAUFANORDNUNG EINES KRAFTFAHRZEUGS**

(30) Priorität: 06.12.2019 DE 102019219056
(71) Anmelder: VOLKSWAGEN AG, 38440 Wolfsburg (DE)
(72) Erfinder: Diedrich, Mathias, 38165 Lehre (DE); Lucke, Stefan, 38446 Wolfsburg (DE)

(57) **Zusammenfassung**

Kühlkreislaufanordnung (1) eines Kraftfahrzeugs (2), zumindest umfassend mindestens einen ersten Kühlkreislauf (3) mit einer Fluidleitung (4) sowie einer Pumpe (5) zur Förderung eines Fluides durch die mindestens eine Fluidleitung (4), wobei der erste Kühlkreislauf (3) zumindest einen ersten Teil (6) und einem zweiten Teil (7) umfasst, die zueinander parallel geschaltet und mit der Pumpe (5) über ein gemeinsames Abzweigstück (8) fluidtechnisch verbunden sind, wobei das Abzweigstück (8) zumindest einen ersten Anschluss (9) mit einem kleinsten ersten Durchflussquerschnitt (10), einen zweiten Anschluss (11) mit einem kleinsten zweiten Durchflussquerschnitt (12) sowie einen dritten Anschluss (13) mit einem kleinsten dritten Durchflussquerschnitt (14) aufweist, wobei die Anschlüsse (9, 11, 13) innerhalb des Abzweigstücks (8) über jeweils einen Strömungspfad für das Fluid miteinander verbunden sind, wobei das Abzweigstück (8) über den ersten Anschluss (9) mit der Pumpe (5), über den zweiten Anschluss (11) mit dem ersten Teil (6) und über den dritten Anschluss (13) mit dem zweiten Teil (7) des ersten Kühlkreislaufs (3) verbunden ist, wobei zumindest der zweite Durchflussquerschnitt (12) und der dritte Durchflussquerschnitt (14) unterschiedlich groß sind.

## Beschreibung

Die Erfindung betrifft eine Kühlkreislaufanordnung eines Kraftfahrzeuges. Insbesondere umfasst die Kühlkreislaufanordnung einen ersten Kühlkreislauf und einen zweiten Kühlkreislauf, die bevorzugt voneinander unterschiedliche Temperaturniveaus aufweisen. Insbesondere ist in dem ersten Kühlkreislauf ein erster Wärmetauscher angeordnet, über den Wärme aus dem ersten Kühlkreislauf an eine Umgebung abgeführt wird, wobei in dem zweiten Kühlkreislauf ein zweiter Wärmetauscher angeordnet ist, über den Wärme aus dem zweiten Kühlkreislauf an eine Umgebung abgeführt wird. Insbesondere ist der erste Wärmetauscher ein Niedertemperaturkühler und der zweite Wärmetauscher ein Hochtemperaturkühler.

Aus der DE 10 2018 100 927 A1 ist eine Brennkraftmaschine mit einem Verbrennungsmotor, einem Frischgasstrang, einem Abgasturbolader, einem Ladeluftkühler, einem Abgasstrang und einer Kühlkreislaufanordnung bekannt. Die Kühlkreislaufanordnung umfasst zwei Kühlkreisläufe. Der erste Kühlkreislauf ist zur Kühlung z. B. des Zylinderkopfes der Brennkraftmaschine vorgesehen (Hochtemperaturkühlkreislauf). Der zweite Kühlkreislauf ist zur Kühlung anderer Komponenten vorgesehen (Niedertemperaturkühlkreislauf). Ein Ladeluftkühler und ein Abgasturbolader-Kühler sind in dem zweiten Kühlkreislauf der Kühlkreisanordnung angeordnet, wobei beide Kühler miteinander parallelgeschaltet in unterschiedlichen Teilen des zweiten Kühlkreislaufs angeordnet sind. Ein Mengenstrom von Kühlmittel kann für die Teile des zweiten Kühlkreislaufs über eine Ventilanordnung verändert werden.

Es besteht ein ständiges Bedürfnis Teile- und Montagekosten für Komponenten von Kraftfahrzeugen zu verringern sowie die Komplexität von Baugruppen zu reduzieren.

Aufgabe der vorliegenden Erfindung ist es, eine Kühlkreislaufanordnung weiter zu vereinfachen. Insbesondere soll eine Kühlkreislaufanordnung vorgeschlagen werden, die möglichst einfach ausgeführt und kostengünstig herstellbar ist.

Zur Lösung dieser Aufgabe trägt eine Kühlkreislaufanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus der Figur ergänzt werden, wobei weitere Ausführungsvarianten der Erfindung aufgezeigt werden.

Es wird eine Kühlkreislaufanordnung eines Kraftfahrzeugs vorgeschlagen. Die Kühlkreislaufanordnung umfasst zumindest mindestens einen ersten Kühlkreislauf mit einer Fluidleitung sowie einer Pumpe zur Förderung eines Fluides durch die mindestens eine Fluidleitung, wobei der erste Kühlkreislauf zumindest einen ersten Teil und einen zweiten Teil umfasst, die zueinander parallel geschaltet und mit der Pumpe über ein gemeinsames Abzweigstück fluidtechnisch verbunden sind. Das Abzweigstück weist zumindest einen ersten Anschluss mit einem kleinsten ersten Durchflussquerschnitt, einen zweiten Anschluss mit einem kleinsten zweiten Durchflussquerschnitt sowie einen dritten Anschluss mit einem kleinsten dritten Durchflussquerschnitt auf. Die Anschlüsse sind innerhalb des Abzweigstücks über jeweils einen Strömungspfad für das Fluid miteinander verbunden. Das Abzweigstück ist über den ersten Anschluss mit der Pumpe, über den zweiten Anschluss mit dem ersten Teil und über den dritten Anschluss mit dem zweiten Teil des ersten Kühlkreislaufs verbunden. Zumindest der zweite Durchflussquerschnitt und der dritte Durchflussquerschnitt sind unterschiedlich groß.

Insbesondere umfasst die Kühlkreislaufanordnung einen ersten Kühlkreislauf und einen zweiten Kühlkreislauf, die bevorzugt voneinander unterschiedliche Temperaturniveaus aufweisen. Insbesondere ist in dem ersten Kühlkreislauf ein erster Wärmetauscher angeordnet, über den Wärme aus dem ersten Kühlkreislauf an eine Umgebung abgeführt wird. Insbesondere ist in dem zweiten Kühlkreislauf ein zweiter Wärmetauscher angeordnet, über den Wärme aus dem zweiten Kühlkreislauf an eine Umgebung abgeführt wird. Insbesondere ist der erste Wärmetauscher ein Niedertemperaturkühler. Insbesondere ist der zweite Wärmetauscher ein Hochtemperaturkühler. Insbesondere weist jeder der Kühlkreisläufe eine eigene Pumpe zur Förderung des Fluids durch den jeweiligen Kühlkreislauf auf.

Das Fluid ist insbesondere eine Flüssigkeit, bevorzugt in Kraftfahrzeugen üblicherweise eingesetztes Kühlwasser.

Hier wird insbesondere vorgeschlagen, das aus der DE 10 2018 100 927 A1 bekannte, schaltbare Ventil durch ein Abzweigstück zu ersetzen.

Das Abzweigstück umfasst mindestens drei Anschlüsse, die innerhalb des Abzweigstücks über jeweils einen Strömungspfad für das Fluid miteinander verbunden sind. Ein über den ersten Anschluss eintretendes Fluid wird über den zweiten Anschluss hin zum ersten Teil und über den dritten Anschluss hin zum zweiten Teil gefördert. Stromabwärts der Teile wird das Fluid wieder zusammengeführt. Die Teile sind fluidtechnisch also zueinander parallelgeschaltet.

Über die unterschiedlich ausgeführten kleinsten Durchflussquerschnitte kann eine vorbestimmte Aufteilung eines durch die Pumpe geförderten Volumenstroms in einfacher Weise erreicht werden, wobei über den zweiten Durchflussquerschnitt ein erster Volumenstrom und über den dritten Durchflussquerschnitt ein zweiter (vom ersten abweichender) Volumenstrom eingestellt wird. Damit kann ein über den ersten Anschluss in das Abzweigstück eintretender Volumenstrom in unterschiedlich große Volumenströme aufgeteilt werden.

Das Abzweigstück weist konstante kleinste Durchflussquerschnitte auf, die nicht veränderbar sind. Die kleinsten Durchflussquerschnitte bilden also gerade keine schaltbaren Ventile. Ein kleinster Durchflussquerschnitt bezeichnet den jeweils kleinsten für das Fluid durchströmbaren Querschnitt des jeweiligen Anschlusses des Abzweigstücks.

Insbesondere werden durch den kleinsten zweiten Durchflussquerschnitt und den kleinsten dritten Durchflussquerschnitt Drosseln oder Blenden gebildet, über die eine Aufteilung des Volumenstroms realisiert wird.

Bei einer Blende ist ein Verhältnis zwischen dem kleinsten Durchflussquerschnitt (D) und der Länge (L, entlang der Hauptströmungsrichtung des Fluids) des kleinsten Durchflussquerschnitts, also D/L, deutlich größer als bei einer Drossel.

Insbesondere ist der erste Durchflussquerschnitt der größte der drei genannten kleinsten Durchflussquerschnitte.

Insbesondere kann das Abzweigstück auch mehr als drei Anschlüsse aufweisen.

Ein kleinster Durchflussquerschnitt ist insbesondere ein kleinster durchströmbarer Querschnitt des jeweiligen Anschlusses, so dass durch diesen Querschnitt ein Volumenstrom vorgebbar bzw. (im Betrieb) einstellbar ist. Als Querschnitt wird hier eine (frei) durchströmbare Fläche senkrecht zur Haupt-Strömungsrichtung des Fluids betrachtet.

Insbesondere unterscheiden sich die (durchströmbaren Flächen der) kleinsten Durchflussquerschnitte um mindestens 10 % voneinander, bevorzugt um mindestens 20 %, besonders bevorzugt um mindestens 40 %.

Insbesondere ist der kleinste zweite und der kleinste dritte Durchflussquerschnitt jeweils eine Verengung des durchströmbaren Querschnitts entlang des Strömungspfads.

Insbesondere weist jeder Anschluss einen Anschlussdurchmesser zum Anschluss einer Fluidleitung auf. Der Anschlussdurchmesser definiert das Anschlussmaß der Fluidleitung. Z. B. kann der Anschlussdurchmesser ein Innendurchmesser oder ein Außendurchmesser sein. Der Anschluss für die Fluidleitung kann als Schraubanschluss, Steckanschluss oder ähnliches ausgeführt sein.

Insbesondere sind ein Anschlussdurchmesser des zweiten Anschlusses und des dritten Anschlusses (ggf. auch des ersten Anschlusses) jeweils gleich groß, so dass an diese Anschlüsse (trotz unterschiedlicher kleinster Durchflussquerschnitte) jeweils Fluidleitungen mit gleichen Anschlussmaßen anschließbar sind.

Insbesondere ist zumindest in dem ersten Teil eine zu temperierende erste Komponente und in dem zweiten Teil eine zu temperierende zweite Komponente angeordnet.

Insbesondere ist die erste Komponente ein Ladeluftkühler. Ein Ladeluftkühler ist insbesondere in einem Ansaugrohr einer Verbrennungskraftmaschine angeordnet, um die Temperatur einer der mindestens einen Brennkammer der Verbrennungskraftmaschine zugeführten Umgebungsluft (ggf. zusätzlich aufweisend rückgeführtes Abgas) zu temperieren. Insbesondere kann die Temperatur der Ladeluft über den Ladeluftkühler auf einen vorbestimmten Temperatur-Sollwert gesenkt werden, so dass in der Verbrennungskraftmaschine erzeugte Emissionen reduziert werden können.

Insbesondere ist die zweite Komponente ein Abgasturbolader-Lager. Ein Abgasturbolader weist in einer Abgasleitung einer Verbrennungskraftmaschine eine Turbine auf, die durch das Abgas antreibbar ist. Diese kinetische Energie der Turbine kann zum Antrieb eines Verdichters eingesetzt werden, der in der Ansaugseite der Verbrennungskraftmaschine angeordnet ist. Über den Verdichter kann die der Verbrennungskraftmaschine zugeführte Umgebungsluft auf einen höheren Druck verdichtet werden (Ladeluft). Das Abgasturbolader-Lager umfasst eine Lagerung der drehbaren Komponenten des Abgasturboladers. Aufgrund der hohen Drehzahl der Komponenten entsteht Wärme, die über den zweiten Teil des Kühlkreislaufs abgeführt werden kann.

Infolge der Parallel-Schaltung des ersten Teils und des zweiten Teils kann der Ladeluftkühler unabhängig von dem Abgasturbolader-Lager temperiert werden. Über das Abzweigstück wird sichergestellt, dass insbesondere das Abgasturbolader-Lager auch in kritischen Betriebspunkten (hohen Drehzahlen der Komponenten des Abgasturboladers) zu jedem Zeitpunkt durch den vorbestimmten Volumenstrom an Fluid beaufschlagt wird.

Über die Androsselung des von der Pumpe geförderten Volumenstroms kann eine vorbestimmte Verteilung des Volumenstroms hin zum fluidgekühlten Ladeluftkühler und hin zum fluidgekühlten Abgasturbolader-Lager erzielt werden. Die Kühlung der Ladeluft kann damit verbessert werden, dass sich das Fluid über eine längeren Zeitraum in einem ersten Wärmetauscher des ersten Kühlkreislaufs aufhält und so stärker abgekühlt werden kann. Die Temperatur im Ansaugrohr kann so weiter gesenkt und damit der Wirkungsgrad der Verbrennungskraftmaschine erhöht werden.

Insbesondere weist der erste Kühlkreislauf einen ersten Wärmetauscher auf, über den das Fluid Wärmeenergie mit einer Umgebung austauscht.

Insbesondere ist der erste Wärmetauscher stromabwärts der Teile des ersten Kühlkreislaufs und stromaufwärts der Pumpe angeordnet.

Insbesondere ist zumindest einer der zumindest zwei Teile des ersten Kühlkreislaufs ventillos ausgeführt. Insbesondere sind zumindest in einem der zwei Teile des ersten Kühlkreislaufs keine elektrisch betätigten oder schaltbare Ventile angeordnet. Bevorzugt sind in keinem der zwei Teile des ersten Kühlkreislaufs schaltbare Ventile angeordnet. Besonders bevorzugt sind in dem ersten Kühlkreislauf keine schaltbaren Ventile angeordnet.

Insbesondere ist die Pumpe unmittelbar stromaufwärts des Abzweigstücks angeordnet.

Insbesondere kann durch die Anordnung der Pumpe stromaufwärts des Abzweigstücks eine hohe Druckdifferenz zumindest an der zweiten Komponente realisiert werden.

Insbesondere ist das Abzweigstück einteilig ausgeführt.

Einteilig ausgeführt bedeutet insbesondere, dass alle Bestandteile des Abzweigstücks (also erster Anschluss mit erstem Durchflussquerschnitt, zweiter Anschluss mit zweitem Durchflussquerschnitt sowie dritter Anschluss mit drittem Durchflussquerschnitt) stoffschlüssig miteinander verbunden und damit nicht ohne Zerstörung einzelner Teile voneinander trennbar sind.

Bevorzugt ist das Abzweigstück ein Spritzgussteil, bevorzugt hergestellt aus einem Kunststoff.

Alternativ kann das Abzweigstück durch ein additives Herstellungsverfahren (z. B. ein 3D-Druckverfahren) und/oder durch ein Pressverfahren und/oder durch ein Sinterverfahren hergestellt sein.

Es wird weiter ein Kraftfahrzeug vorgeschlagen, zumindest umfassend eine Verbrennungskraftmaschine mit der beschriebenen Kühlkreislaufanordnung, wobei die Kühlkreislaufanordnung zum Temperieren zumindest der Verbrennungskraftmaschine geeignet ausgeführt ist. Die Kühlkreislaufanordnung umfasst insbesondere zwei Kühlkreisläufe, wobei in dem zweiten Kühlkreislauf insbesondere ein zweiter Wärmetauscher angeordnet ist, über den Wärme aus dem zweiten Kühlkreislauf an eine Umgebung abgeführt wird. Insbesondere ist der zweite Wärmetauscher ein Hochtemperaturkühler. Insbesondere wird über den zweiten Kühlkreislauf Wärme der Verbrennungskraftmaschine an die Umgebung abgeführt, z. B. über eine Zylinderkopfkühlung.

Insbesondere weist jeder Kühlkreislauf eine eigene Pumpe auf. Bevorzugt sind beide Kühlkreisläufe mit dem gleichen Ausgleichbehälter verbunden, in dem ein Reservoir des Fluids bevorratet ist und aus dem eine Befüllung der Kühlkreisläufe mit Fluid sichergestellt wird.

Die Ausführungen zu der Kühlkreislaufanordnung sind insbesondere auf das Kraftfahrzeug übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figur näher erläutert. Es ist darauf hinzuweisen, dass die Erfindung durch das angeführte Ausführungsbeispiel nicht beschränkt werden soll. Insbesondere ist es, soweit nicht explizit anders dargestellt, auch möglich, Teilaspekte der in der Figur erläuterten Sachverhalte zu extrahieren und mit anderen Bestandteilen und Erkenntnissen aus der vorliegenden Beschreibung zu kombinieren. Insbesondere ist darauf hinzuweisen, dass die Figur und insbesondere die dargestellten Größenverhältnisse nur schematisch sind.

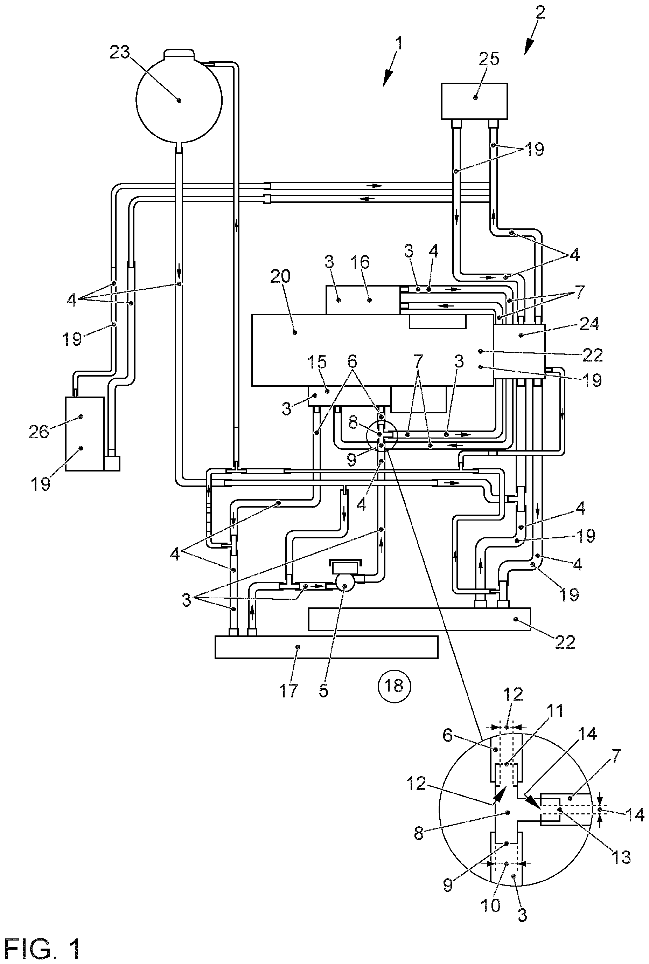

Fig. 1 zeigt ein Kraftfahrzeug 2 mit einer Verbrennungskraftmaschine 20 und einer Kühlkreislaufanordnung 1.

Die Kühlkreislaufanordnung 1 umfasst zwei Kühlkreisläufe 3, 19, die voneinander unterschiedliche Temperaturniveaus aufweisen. In dem zweiten Kühlkreislauf 19 ist ein zweiter Wärmetauscher 21 angeordnet, über den Wärme aus dem zweiten Kühlkreislauf 19 an eine Umgebung 18 abgeführt wird. Der zweite Wärmetauscher 21 ist ein Hochtemperaturkühler. Über den zweiten Kühlkreislauf 19 wird Wärme der Verbrennungskraftmaschine 20, hier über eine Zylinderkopfkühlung 22, an die Umgebung 18 abgeführt.

Die Kühlkreislaufanordnung 1 umfasst zudem einen ersten Kühlkreislauf 3 mit einer Fluidleitung 4 sowie einer Pumpe 5 zur Förderung eines Fluides durch die Fluidleitung 4, wobei der erste Kühlkreislauf 3 einen ersten Teil 6 und einen zweiten Teil 7 umfasst, die zueinander parallel geschaltet und mit der Pumpe 5 über ein gemeinsames Abzweigstück 8 fluidtechnisch verbunden sind. Das Abzweigstück 8, nebenstehend in einer vergrößerten Darstellung dargestellt, weist einen ersten Anschluss 9 mit einem kleinsten ersten Durchflussquerschnitt 10, einen zweiten Anschluss 11 mit einem kleinsten zweiten Durchflussquerschnitt 12 sowie einen dritten Anschluss 13 mit einem kleinsten dritten Durchflussquerschnitt 14 auf. Die Anschlüsse 9, 11, 13 sind innerhalb des Abzweigstücks 8 über jeweils einen Strömungspfad für das Fluid miteinander verbunden. Das Abzweigstück 8 ist über den ersten Anschluss 9 mit der Pumpe 5, über den zweiten Anschluss 11 mit dem ersten Teil 6 und über den dritten Anschluss 13 mit dem zweiten Teil 7 des ersten Kühlkreislaufs 3 verbunden. Der zweite Durchflussquerschnitt 12 und der dritte Durchflussquerschnitt 14 sind unterschiedlich groß.

In dem ersten Kühlkreislauf 3 ist ein erster Wärmetauscher 17 angeordnet, über den Wärme aus dem ersten Kühlkreislauf 3 an eine Umgebung 18 abgeführt wird. Der erste Wärmetauscher 17 ist ein Niedertemperaturkühler, der z. B. an einer Front des Kraftfahrzeuges 2 angeordnet ist. Der zweite Wärmetauscher 21 ist ein Hochtemperaturkühler, der z. B. an einer Front des Kraftfahrzeuges 2 angeordnet ist.

Die Kühlkreisläufe 3, 19 sind beide über Fluidleitungen 4 mit dem gleichen Ausgleichbehälter 23 verbunden, in dem ein Reservoir des Fluids bevorratet ist und aus dem eine Befüllung der Kühlkreisläufe 3, 19 mit Fluid sichergestellt wird.

Das Abzweigstück 8 umfasst drei Anschlüsse 9, 11, 13, die innerhalb des Abzweigstücks 8 über jeweils einen Strömungspfad für das Fluid miteinander verbunden sind. Ein über den ersten Anschluss 9 eintretendes Fluid wird über den zweiten Anschluss 11 hin zum ersten Teil 6 und über den dritten Anschluss 13 hin zum zweiten Teil 7 gefördert. Stromabwärts der Teile 6, 7 und stromaufwärts des ersten Wärmetauschers 17 wird das Fluid wieder zusammengeführt. Die Teile 6, 7 sind fluidtechnisch zueinander parallelgeschaltet.

Über die unterschiedlich ausgeführten Durchflussquerschnitte 11, 13 kann eine vorbestimmte Aufteilung eines durch die Pumpe 5 geförderten Volumenstroms in einfacher Weise erreicht werden, wobei über den zweiten Durchflussquerschnitt 11 ein erster Volumenstrom und über den dritten Durchflussquerschnitt 13 ein zweiter (vom ersten abweichender) Volumenstrom eingestellt wird. Damit kann ein über den ersten Anschluss 9 in das Abzweigstück 8 eintretender Volumenstrom in unterschiedlich große Volumenströme aufgeteilt werden.

In dem ersten Teil 6 ist ein Ladeluftkühler als eine zu temperierende erste Komponente 15 und in dem zweiten Teil 7 ein Abgasturbolader-Lager als eine zu temperierende zweite Komponente 16 angeordnet.

Infolge der Parallel-Schaltung des ersten Teils 6 und des zweiten Teils 7 kann der Ladeluftkühler unabhängig von dem Abgasturbolader-Lager temperiert werden. Über das Abzweigstück 8 wird sichergestellt, dass das Abgasturbolader-Lager auch in kritischen Betriebspunkten (hohen Drehzahlen der Komponenten des Abgasturboladers) zu jedem Zeitpunkt durch den vorbestimmten Volumenstrom an Fluid beaufschlagt wird.

In dem ersten Kühlkreislauf 3 sind keine schaltbaren Ventile angeordnet. Die Pumpe 5 ist unmittelbar stromaufwärts des Abzweigstücks 8 angeordnet. Das Abzweigstück 8 ist einteilig ausgeführt.

Die Kühlkreislaufanordnung 1 umfasst weiter ein Kennfeldkühlungsmodul 24, über das unterschiedliche Komponenten der Kühlkreislaufanordnung 1 mit Fluid beaufschlagt werden können. Das Kennfeldkühlungsmodul 24 kann z. B. eine Drehschieberwelle aufweisen, die in Abhängigkeit von einer Drehstellung unterschiedliche Fluidleitungen 4 regelbar freigibt bzw. miteinander verbindet. Damit kann z. B. eine Heizung 25 oder eine Standheizung 26 geregelt angesteuert bzw. mit Fluid beaufschlagt werden.

### Bezugszeichenliste

- 1: Kühlkreislaufanordnung
- 2: Kraftfahrzeug
- 3: erster Kühlkreislauf
- 4: Fluidleitung
- 5: Pumpe
- 6: erster Teil
- 7: zweiter Teil
- 8: Abzweigstück
- 9: erster Anschluss
- 10: erster Durchflussquerschnitt
- 11: zweiter Anschluss
- 12: zweiter Durchflussquerschnitt
- 13: dritter Anschluss
- 14: dritter Durchflussquerschnitt
- 15: erste Komponente
- 16: zweite Komponente
- 17: erster Wärmetauscher
- 18: Umgebung
- 19: zweiter Kühlkreislauf
- 20: Verbrennungskraftmaschine
- 21: zweiter Wärmetauscher
- 22: Zylinderkopfkühlung
- 23: Ausgleichbehälter
- 24: Kennfeldkühlungsmodul
- 25: Heizung
- 26: Standheizung

## Patentansprüche

1. Kühlkreislaufanordnung (1) eines Kraftfahrzeugs (2), zumindest umfassend mindestens einen ersten Kühlkreislauf (3) mit einer Fluidleitung (4) sowie einer Pumpe (5) zur Förderung eines Fluides durch die mindestens eine Fluidleitung (4), wobei der erste Kühlkreislauf (3) zumindest einen ersten Teil (6) und einen zweiten Teil (7) umfasst, die zueinander parallel geschaltet und mit der Pumpe (5) über ein gemeinsames Abzweigstück (8) fluidtechnisch verbunden sind, wobei das Abzweigstück (8) zumindest einen ersten Anschluss (9) mit einem kleinsten ersten Durchflussquerschnitt (10), einen zweiten Anschluss (11) mit einem kleinsten zweiten Durchflussquerschnitt (12) sowie einen dritten Anschluss (13) mit einem kleinsten dritten Durchflussquerschnitt (14) aufweist, wobei die Anschlüsse (9, 11, 13) innerhalb des Abzweigstücks (8) über jeweils einen Strömungspfad für das Fluid miteinander verbunden sind, wobei das Abzweigstück (8) über den ersten Anschluss (9) mit der Pumpe (5), über den zweiten Anschluss (11) mit dem ersten Teil (6) und über den dritten Anschluss (13) mit dem zweiten Teil (7) des ersten Kühlkreislaufs (3) verbunden ist, wobei zumindest der zweite Durchflussquerschnitt (12) und der dritte Durchflussquerschnitt (14) unterschiedlich groß sind.

2. Kühlkreislaufanordnung (1) nach Patentanspruch 1, wobei zumindest in dem ersten Teil (6) eine zu temperierende erste Komponente (15) und in dem zweiten Teil (7) eine zu temperierende zweite Komponente (16) angeordnet ist.

3. Kühlkreislaufanordnung (1) nach Patentanspruch 2, wobei die erste Komponente (15) ein Ladeluftkühler ist.

4. Kühlkreislaufanordnung (1) nach einem der vorhergehenden Patentansprüche 2 und 3, wobei die zweite Komponente (16) ein Abgasturbolader-Lager ist.

5. Kühlkreislaufanordnung (1) nach einem der vorhergehenden Patentansprüche, wobei der erste Kühlkreislauf (3) einen ersten Wärmetauscher (17) aufweist, über den das Fluid Wärmeenergie mit einer Umgebung (18) austauscht.

6. Kühlkreislaufanordnung (1) nach Patentanspruch 5, wobei der erste Wärmetauscher (17) stromabwärts der Teile (6, 7) des ersten Kühlkreislaufs (3) und stromaufwärts der Pumpe (5) angeordnet ist.

7. Kühlkreislaufanordnung (1) nach einem der vorhergehenden Patentansprüche, wobei zumindest einer der zumindest zwei Teile (6, 7) des ersten Kühlkreislaufs (3) ventillos ausgeführt ist.

8. Kühlkreislaufanordnung (1) nach einem der vorhergehenden Patentansprüche, wobei die Pumpe (5) unmittelbar stromaufwärts des Abzweigstücks (8) angeordnet ist.

9. Kühlkreislaufanordnung (1) nach einem der vorhergehenden Patentansprüche, wobei das Abzweigstück (8) einteilig ausgeführt ist.

10. Kraftfahrzeug (2), zumindest umfassend eine Verbrennungskraftmaschine (20) mit einer Kühlkreislaufanordnung (1) nach einem der vorhergehenden Patentansprüche, wobei die Kühlkreislaufanordnung (1) zum Temperieren zumindest der Verbrennungskraftmaschine (20) geeignet ausgeführt ist.
